# EUROPEAN PATENT APPLICATION

(11) **EP 4 578 889 A1**
(43) Date of publication of application: **02.07.2025**
(21) Application number: 24219760.6
(22) Date of filing: 13.12.2024
(51) Int. Cl.: C08G 59/24, C08G 64/04, C08G 64/42, C08G 59/06, C08G 59/22, C08G 59/42

(54) **CARBONATE-EPOXY COPOLYMER, CURABLE CARBONATE COMPOSITION, AND MANUFACTURING METHOD OF FORMING CARBONATE-CONTAINING THERMOSET**

(30) Priority: 27.12.2023 CN 202311828484
(71) Applicant: Swancor Innovation & Incubation Co., Ltd., Nantou City, Nantou County 540028 (TW)
(72) Inventor: WANG, Meng-Wei, 540028 Nantou City (TW); HUANG, Yun-Wen, 540028 Nantou City (TW); CHEN, Guan-Yu, 540028 Nantou City (TW)
(74) Representative: D Young & Co LLP

(57) **Abstract**

A carbonate-epoxy copolymer includes a structure represented by formula (I), of which each symbol is defined in the specification. A curable carbonate composition includes the aforementioned carbonate-epoxy copolymer, a solvent, a first catalyst, a second catalyst, and an epoxy material. A manufacturing method of forming a carbonate-containing thermoset includes the steps as follows. The aforementioned curable carbonate composition is provided. A promoter is added into the curable carbonate composition to form a mixture. The mixture is heated to a curing temperature.

## Description

### BACKGROUND

### Technical Field

The present disclosure relates to a carbonate-epoxy copolymer, a curable carbonate composition, and a manufacturing method of forming a carbonate-containing thermoset. More particularly, the present disclosure relates to a carbonate-epoxy copolymer, a curable carbonate composition including the carbonate epoxy copolymer which has great storage stability, and a manufacturing method of forming a carbonate-containing thermoset having great material properties.

### Description of Related Art

Polycarbonate (PC) is a thermoplastic polymer material formed by the transesterification reaction of bisphenol A and diphenyl carbonate at high temperature. Polycarbonate is one of the five major engineering plastic materials, which has good transparency, impact resistance and heat resistance, and is widely used in consumer products such as lenses of glasses, optical discs, data storage devices or automotive lamp covers.

When the aromatic carbonate structure and the epoxy structure are catalyzed by the benzyldimethylamine (BDMA) catalyst, the transesterification reaction performs at high temperature. The aromatic carbonate structure is replaced with an aliphatic carbonate structure, and a cyclization side reaction happens at the same time to form an ethylene carbonate structure. The cyclization side reaction makes the molecular chain of the cured product break and damages the integrity of the network structure of the cured product. Therefore, to prepare the cured product with high heat resistance from the carbonate structure and the epoxy structure, it is necessary to overcome the problems caused by the cyclization side reaction.

Furthermore, if a diphenol monomer with a more complex chemical structure than bisphenol A is used as the raw material to synthesize the carbonate oligomer, the obtained product can be melt and mixed with epoxy resin and cured at high temperature. Compared to the carbonate oligomer prepared by using bisphenol A as the raw material, the cured product obtained by using the diphenol monomer as the raw material has better heat resistance. However, the disadvantage of the synthesis method is that, the carbonate oligomer must be synthesized from the monomer at a high temperature above 200°C, and the by-product of phenol must be separated by distillation under reduced pressure, resulting in significant energy consumption.

Moreover, if the waste polycarbonate is directly used as a curing agent for the epoxy resin, the cured product after solidification has high heat resistance and degradability. After the cured product is degraded, a phenoxy resin with high molecular weight can be obtained, which can be used as a chemical additive and applied in other fields such as coating, and a more environmentally friendly and efficient disposal solution for waste polycarbonate is provided. However, the disadvantage of the disposal solution is that, the melting point of the waste polycarbonate is too high, which makes the waste polycarbonate difficult to directly melt and mix with the epoxy resin at high temperature. Also, due to the high molecular weight of the waste polycarbonate, the solubility thereof in organic solvents is poor. Therefore, a solid content in solution of the waste polycarbonate can only reach 10 wt% to 30 wt%, resulting in a great limit of the practical application thereof.

In this regard, in the conventional technologies, the carbonate oligomer must be obtained by monomer polymerization, and the energy consumption of the high-temperature process and the issue of by-product treatment remain challenges to be addressed. Furthermore, although the carbonate oligomer and the epoxy resin can be cured jointly, it is still insufficient in mixing uniformity, solvent solubility and storage stability during the curing process.

### SUMMARY

A carbonate-epoxy copolymer is provided according to one embodiment of the present disclosure. The carbonate-epoxy copolymer includes a structure represented by formula (I): 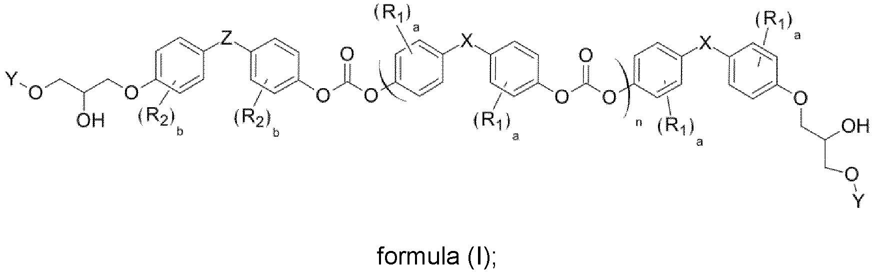 wherein each of R₁ and R₂ is a hydrogen atom, an alkyl group with a carbon number of 1 to 6, an allyl group, an alkoxy group with a carbon number of 1 to 6, an aryl group with a carbon number of 6 to 12, or a halogen atom independently; each of a and b is an integer of 0 to 4 independently; and n is an integer of 7 to 24; Y is a chemical structure including at least one epoxy group, each of X and Z is a single bond, a structure represented by formula (1), formula (2), formula (3), formula (4), formula (5), formula (6), formula (7), formula (8), formula (9), formula (10), or formula (11) independently: 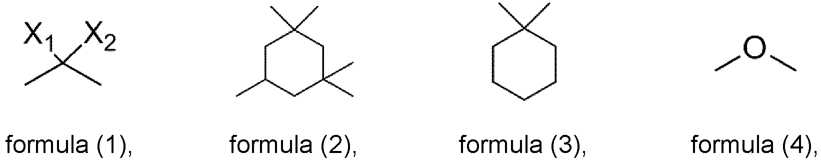 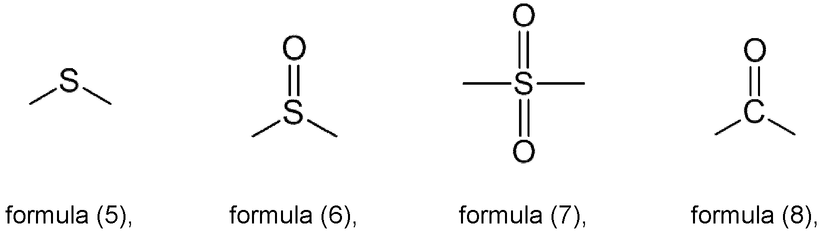 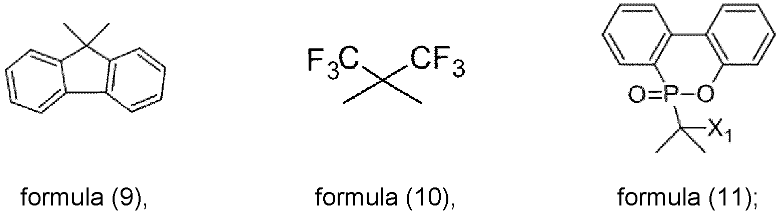 wherein each of X₁ and X₂ is a hydrogen atom, an alkyl group with a carbon number of 1 to 6, or an aryl group with a carbon number of 6 to 12 independently.

According to the carbonate-epoxy copolymer of the foregoing embodiment, the carbonate-epoxy copolymer includes a structure represented by formula (I-a), formula (I-b), or formula (I-c):

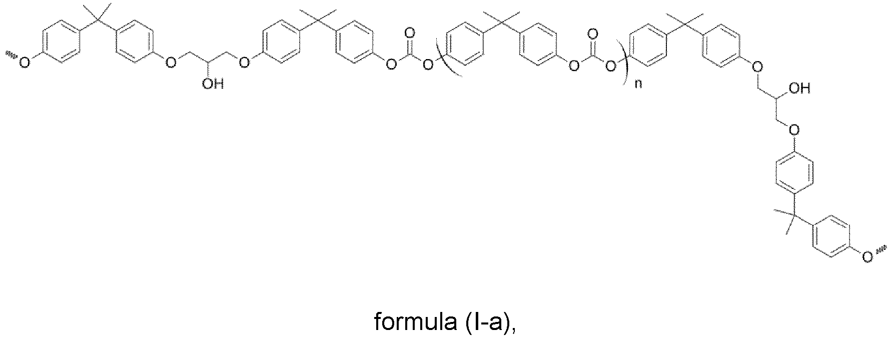

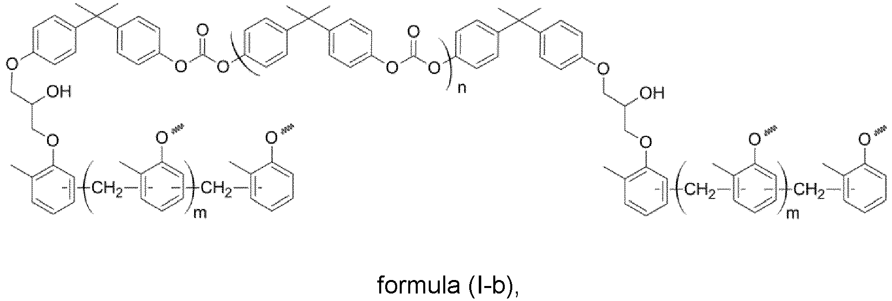

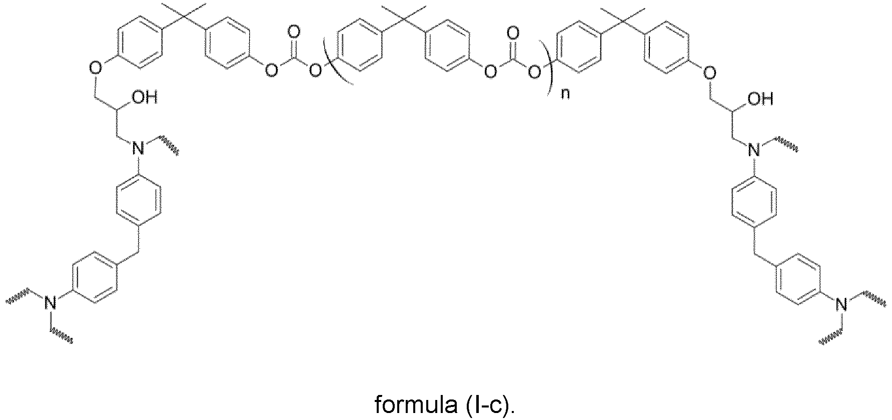

According to the carbonate-epoxy copolymer of the foregoing embodiment, the carbonate-epoxy copolymer is formed by a first mixture reacting with a second material, the first mixture is formed by a polycarbonate reacting with a first material, the first mixture includes a carbonate oligomer, the second material includes at least two epoxy groups, the first material has a structure represented by formula (i), and the carbonate oligomer has a structure represented by formula (ii):

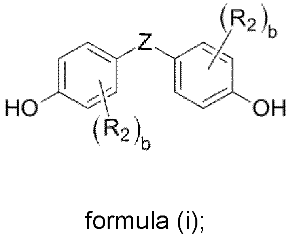

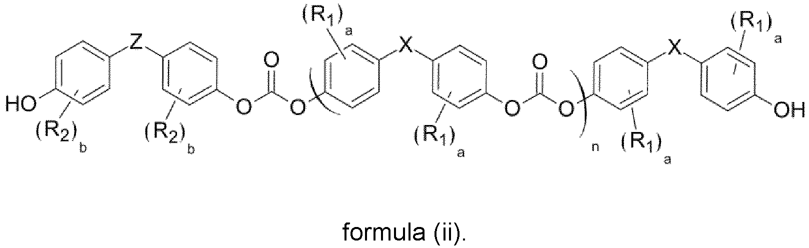

According to the carbonate-epoxy copolymer of the foregoing embodiment, a molar ratio of the first material to the polycarbonate is 6 to 20.

According to the carbonate-epoxy copolymer of the foregoing embodiment, a number average molecular weight of the first mixture is 1000 g/mole to 5000 g/mole.

A curable carbonate composition is provided according to another embodiment of the present disclosure. The curable carbonate composition includes the carbonate-epoxy copolymer of the aforementioned embodiment, a solvent, a first catalyst, a second catalyst, and an epoxy material.

According to the curable carbonate composition of the foregoing embodiment, the curable carbonate composition is a clear solution.

According to the curable carbonate composition of the foregoing embodiment, the solvent is selected from a group consisting of N,N-dimethylacetamide, N-Methyl-2-pyrrolidone, dimethylformamide, methyl phenyl ether, dimethyl sulfoxide, 1-methoxy-2-propanol acetate, 1-methoxy-2-propanol propanoate, and cyclohexanone.

According to the curable carbonate composition of the foregoing embodiment, the first catalyst is selected from a group consisting of 1,8-diazabicyclo[5.4.0]undec-7-ene, 1,5,7-triazabicyclo[4.4.0]dec-5-ene, an imidazole compound, a pyridine compound, a tertiary amine compound, and a quaternary ammonium salt.

According to the curable carbonate composition of the foregoing embodiment, the second catalyst is selected from a group consisting of triphenylphosphine, a derivative of triphenylphosphine chloride, a derivative of triphenylphosphine bromide, a derivative of triphenylphosphine iodide, and a quaternary ammonium salt.

A manufacturing method of forming a carbonate-containing thermoset is provided according to one another embodiment of the present disclosure. The manufacturing method of forming the carbonate-containing thermoset includes the steps as follows. The curable carbonate composition of the aforementioned embodiment is provided. A promoter is added into the curable carbonate composition to form a mixture. The mixture is heated to a curing temperature.

According to the manufacturing method of the foregoing embodiment, the promoter is selected from a group consisting of 1,8-diazabicyclo[5.4.0]undec-7-ene, 1,5,7-triazabicyclo[4.4.0]dec-5-ene, an imidazole compound, a pyridine compound, and a tertiary amine compound.

According to the manufacturing method of the foregoing embodiment, an adding amount of the promoter is 0.05 weight percentage to 1.50 weight percentage of a total amount of the curable carbonate composition.

According to the manufacturing method of the foregoing embodiment, the curing temperature is 150°C to 240°C.

According to the manufacturing method of the foregoing embodiment, the carbonate-containing thermoset has a T_{g} greater than 110°C.

### BRIEF DESCRIPTION OF THE DRAWINGS

The present disclosure can be more fully understood by reading the following detailed description of the embodiment, with reference made to the accompanying drawings as follows:

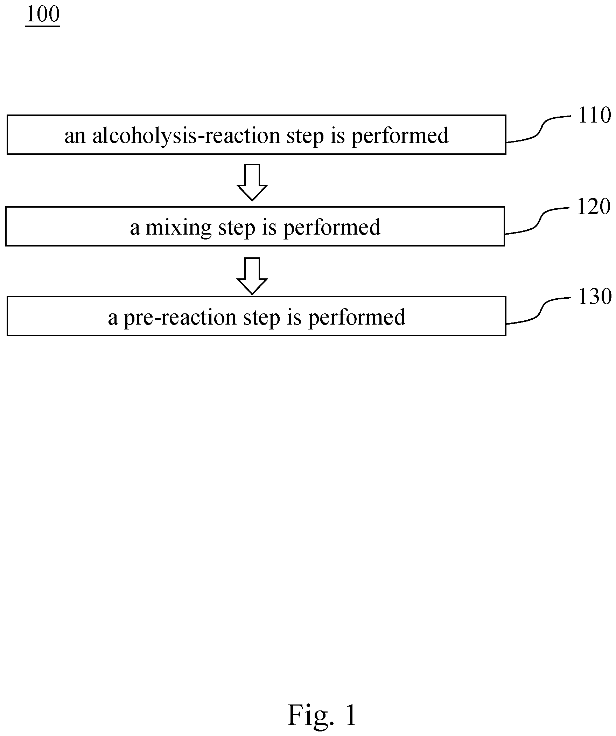

Fig. 1 is a step flow chart of a manufacturing method of a curable carbonate composition of the present disclosure.

### DETAILED DESCRIPTION

The present disclosure will be further exemplified by the following specific embodiments. However, the embodiments can be applied to various inventive concepts and can be embodied in various specific ranges. The specific embodiments are only for the purposes of description, and are not limited to these practical details thereof.

In the present disclosure, the compound structure can be represented by a skeleton formula, and the representation can omit carbon atoms, hydrogen atoms and carbon-hydrogen bonds. If the functional groups are clearly identified in a structural formula, the identified structural formula should be followed.

In the present disclosure, in order to keep conciseness and smoothness, "the first component including a structure represented by formula (i)" can be described as the first component represented by formula (i) or the first component (i) in some cases, and the other compounds or groups can be described in the same manner.

### <Curable Carbonate Composition>

A curable carbonate composition is provided according to one embodiment of the present disclosure, which includes a carbonate-epoxy copolymer, a solvent, a first catalyst, a second catalyst and an epoxy material. The carbonate-epoxy copolymer has a structure represented by formula (I): 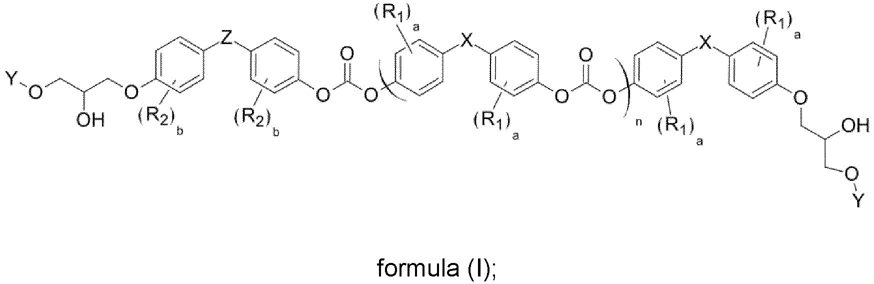 wherein each of R₁ and R₂ is a hydrogen atom, an alkyl group with a carbon number of 1 to 6, an allyl group, an alkoxy group with a carbon number of 1 to 6, an aryl group with a carbon number of 6 to 12 or a halogen atom independently. Each of a and b is an integer of 0 to 4 independently, and n represents the degree of polymerization, which is an integer of 7 to 24. Y is a chemical structure including at least one epoxy group. Each of X and Z is a single bond, a structure represented by formula (1), formula (2), formula (3), formula (4), formula (5), formula (6), formula (7), formula (8), formula (9), formula (10) or formula (11) independently: 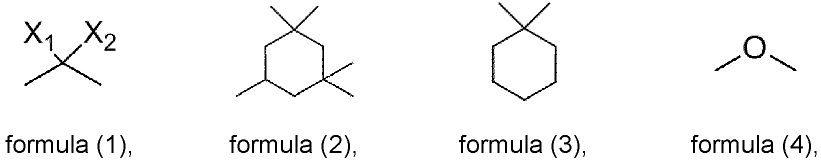 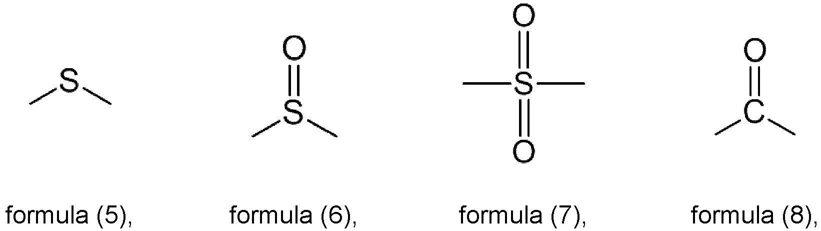 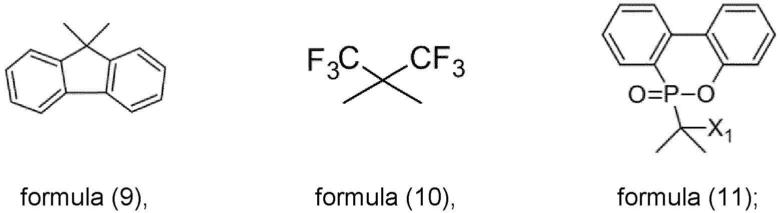 wherein each of X₁ and X₂ is a hydrogen atom, an alkyl group with a carbon number of 1 to 6 or an aryl group with a carbon number of 6 to 12 independently. Furthermore, the aforementioned solvent, first catalyst, second catalyst and epoxy material will be explained in the following paragraphs, and the details thereof will not be given herein.

### <Manufacturing Method of Curable Carbonate Composition>

Please refer to Fig. 1. Fig. 1 is a step flow chart of a manufacturing method of a curable carbonate composition 100 of the present disclosure to manufacture the aforementioned curable carbonate composition. The manufacturing method of the curable carbonate composition 100 includes Step 110, Step 120 and Step 130.

Step 110 is performing an alcoholysis-reaction step, wherein a polycarbonate and a first material are added into the solvent and heated to a first heating temperature for stirring. After the polycarbonate and the first material are dissolved, the first catalyst is added and reacts as the first heating temperature is maintained to form a first mixture, and the first mixture includes a carbonate oligomer. The first material has a structure represented by formula (i), and the carbonate oligomer has a structure represented by formula (ii):

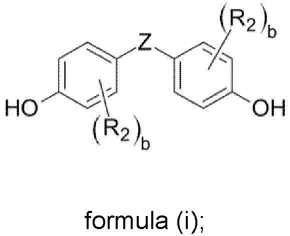

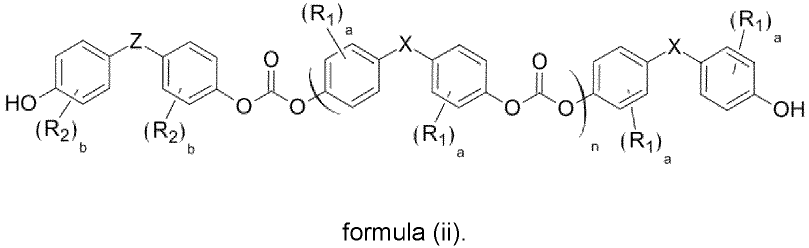

A molar ratio of the first material to the polycarbonate can be 6 to 20, wherein a mole number of the polycarbonate is calculated by the number average molecular weight (Mn) thereof. The solvent can be selected from a group consisting of N,N-dimethylacetamide (DMAc), N-Methyl-2-pyrrolidone (NMP), dimethylformamide (DMF), methyl phenyl ether, dimethyl sulfoxide (DMSO), 1-methoxy-2-propanol acetate, 1-methoxy-2-propanol propanoate and cyclohexanone. The first heating temperature can be 110°C to 170°C.

An adding amount of the first catalyst can be 0.1 mole percentage to 1.0 mole percentage of a content of the first material in the first mixture. The first catalyst can be selected from a group consisting of 1,8-diazabicyclo[5.4.0]undec-7-ene (DBU), 1,5,7-triazabicyclo[4.4.0]dec-5-ene (TBD), an imidazole compound, a pyridine compound, a tertiary amine compound and a quaternary ammonium salt.

A number average molecular weight of the first mixture can be 1000 g/mole to 5000 g/mole, and preferably can be 2000 g/mole to 4000 g/mole.

Step 120 is performing a mixing step, wherein a second material is added into the first mixture and stirred as a second heating temperature is maintained to form a second mixture. The second material includes at least two epoxy groups.

The second material can include at least one epoxy compound, and the epoxy compound includes at least two epoxy groups. When a number of the epoxy compound is two or more, each of the epoxy compounds can have different chemical structure. For example, it can be an epoxy compound including a plurality of epoxy groups with an epoxy compound including two epoxy groups, an epoxy compound including two epoxy groups with another epoxy compound including two epoxy groups, an epoxy compound including a plurality of epoxy groups with another epoxy compound including a plurality of epoxy groups, or other epoxy compounds used together. The present disclosure is not limited to the aforementioned combinations. The epoxy compound can be bisphenol A type epoxy resin, phenolic multifunctional epoxy resin or other types of epoxy resin. An adding amount of the second material can be 15 weight percentage to 65 weight percentage of a total amount of the second mixture, and preferably can be 25 weight percentage to 50 weight percentage of the total amount of the second mixture. The second heating temperature can be 60°C to 150°C.

Step 130 is performing a pre-reaction step, wherein the second catalyst is added into the second mixture and stirred as a third heating temperature is maintained to form the curable carbonate composition. A solid content of the curable carbonate composition can be 40 weight percentage to 80 weight percentage. The solid content is a weight ratio before and after removing the solvent from the curable carbonate composition.

The third heating temperature can be 130°C to 160°C. The second catalyst can be selected from a group consisting of triphenylphosphine, a derivative of triphenylphosphine chloride, a derivative of triphenylphosphine bromide, a derivative of triphenylphosphine iodide and a quaternary ammonium salt. An adding amount of the second catalyst can be 0.05 weight percentage to 1.50 weight percentage of a content of the second material in the second mixture.

It should be mentioned that, the curable carbonate composition of the present embodiment can be obtained after the reactions in the aforementioned manufacturing method 100 are finished and without purification. Therefore, the curable carbonate composition is already for further use without purification, which enhances the convenience for applications and reduces the manufacturing cost.

### <Carbonate-Containing Thermoset>

A carbonate-containing thermoset is provided according to another embodiment of the present disclosure, which is obtained by adding a promoter into the aforementioned curable carbonate composition and heating to a curing temperature for reaction.

The promoter can be selected from a group consisting of 1,8-diazabicyclo[5.4.0]undec-7-ene, 1,5,7-triazabicyclo[4.4.0]dec-5-ene, an imidazole compound, a pyridine compound and a tertiary amine compound. An adding amount of the promoter can be 0.05 weight percentage to 1.50 weight percentage of a total amount of the curable carbonate composition. The curing temperature can be 150°C to 240°C.

The present disclosure will be further exemplified by the following specific embodiments so as to facilitate utilizing and practicing the present disclosure completely by the people skilled in the art without over-interpreting and over-experimenting. However, the readers should understand that the present disclosure should not be limited to these practical details thereof, that is, these practical details are used to describe how to implement the materials and methods of the present disclosure and are not necessary.

### <Fabrication of Curable Carbonate Composition>

### <Example 1>

In 100 g (5×10⁻³ mole) of ground material of recycled polycarbonate (bought from Super Natural Technology CO., LTD, and the product code is RPC-y) and 12.35 g of bisphenol A (5.5×10⁻² mole), add 100 g of cyclohexanone solvent. After the temperature is raised to 150°C, maintain the temperature and stir. Then, add 0.016 g (0.2 mol% of bisphenol A) of 1,8-diazabicyclo[5.4.0]undec-7-ene to react for 6 hours to form a first mixture. The first mixture includes a carbonate oligomer, and the carbonate oligomer has a structure represented by formula (ii-a):

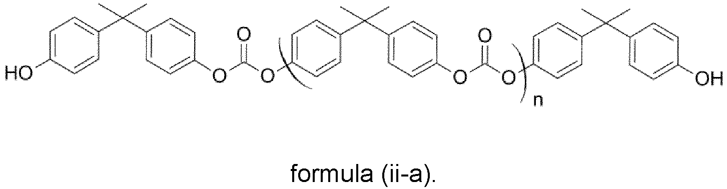

After the first mixture is cooled down, add 150.39 g of bisphenol A type epoxy resin (diglycidyl ether of bisphenol A; DGEBA), and stir under 140°C to form a second mixture. Then, add 1.2 g of triphenylphosphine (0.8 wt% of the epoxy resin) for pre-reaction under 140°C for 2.5 hours, and a curable carbonate composition f1 can be obtained, which includes the carbonate-epoxy copolymer represented by formula (I-a). The solution of the curable carbonate composition f1 is clear light yellow:

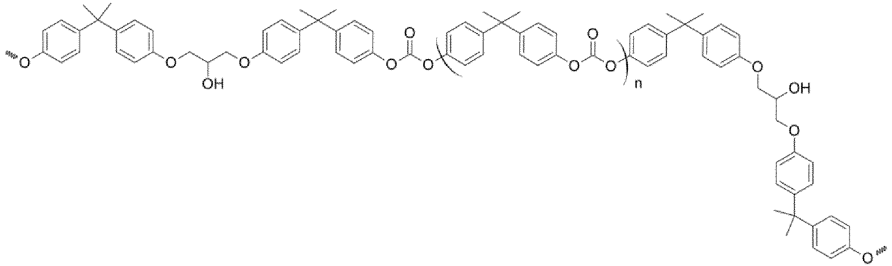

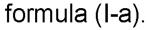

Specifically, the number average molecular weight of the ground material of recycled polycarbonate RPC-y is 18491, and the weight average molecular weight (Mw) thereof is 40990. By measuring the first mixture of Example 1 with the gel permeation chromatograph (GPC), the number average molecular weight thereof is 2872, and the weight average molecular weight thereof is 5490.

### <Example 2>

The manufacturing method of the first mixture of Example 2 is the same as Example 1, but the subsequent process is changed to: after the first mixture is cooled down, add 172.51 g of phenolic multifunctional epoxy resin (bought from Chang Chun Group, and the product code is CNE-195), and stir under 120°C to form a second mixture. Then, add 1.38 g of triphenylphosphine (0.8 wt% of the epoxy resin) for pre-reaction under 140°C for 2.5 hours, and a curable carbonate composition f2 can be obtained, which includes the carbonate-epoxy copolymer represented by formula (I-b). The solution of the curable carbonate composition f2 is clear light yellow:

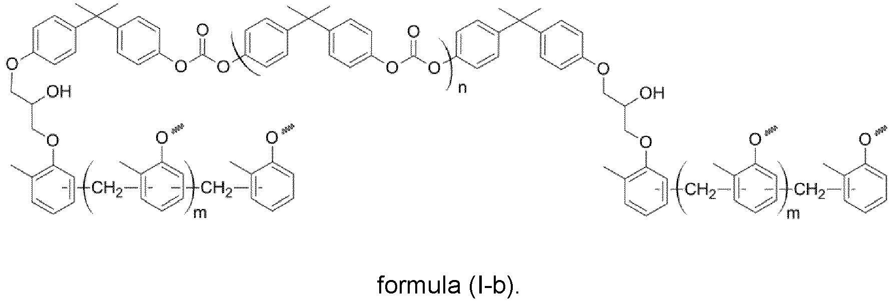

Specifically, by measuring the first mixture of Example 2 with the gel permeation chromatograph, the number average molecular weight thereof is 2585, and the weight average molecular weight thereof is 5351.

### <Example 3>

The manufacturing method of the first mixture of Example 3 is the same as Example 1, but the subsequent process is changed to: after the first mixture is cooled down, add 101.73 g of tetraglycidyl methylenedianiline (TGDDM), and stir under 120°C to form a second mixture. Then, add 0.81 g of triphenylphosphine (0.8 wt% of the epoxy resin) for pre-reaction under 140°C for 4 hours, and a curable carbonate composition f3 can be obtained, which includes the carbonate-epoxy copolymer represented by formula (I-c). The solution of the curable carbonate composition f3 is clear orange red:

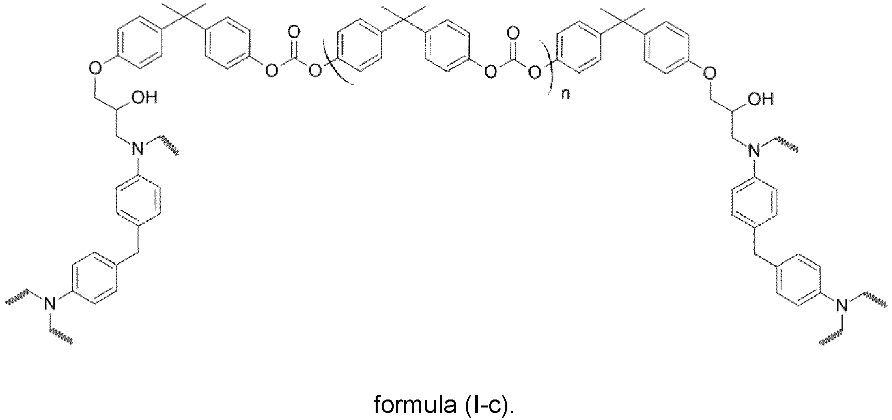

Specifically, by measuring the first mixture of Example 3 with the gel permeation chromatograph, the number average molecular weight thereof is 2378, and the weight average molecular weight thereof is 4883.

### <Example 4>

The manufacturing method of Example 4 is the same as Example 1, but the amount of bisphenol A is changed to 8.64 g (3.8×10⁻² mole). Finally, a curable carbonate composition f4 can be obtained, which includes the carbonate-epoxy copolymer represented by formula (I-a), and the solution of the curable carbonate composition f4 is clear light yellow. By measuring the first mixture of Example 4 with the gel permeation chromatograph, the number average molecular weight thereof is 3238, and the weight average molecular weight thereof is 6877.

### <Comparative Example 1>

In 100 g (5×10⁻³ mole) of ground material of recycled polycarbonate RPC-y and 10.61 g of furfuryl alcohol (1.08×10⁻¹ mole), add 100 g of cyclohexanone solvent. After the temperature is raised to 150°C, maintain the temperature and stir. Then, add 0.032 g (0.2 mol% of furfuryl alcohol) of 1,8-diazabicyclo[5.4.0]undec-7-ene to react for 6 hours to form a first mixture. The first mixture includes a carbonate oligomer, and the carbonate oligomer has a structure represented by formula (C-1):

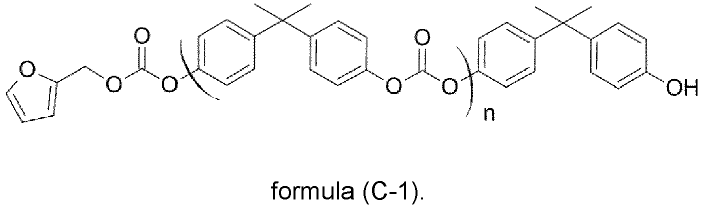

After the first mixture is cooled down, add 148.06 g of bisphenol A type epoxy resin, and stir under 110°C to form a second mixture. Then, add 1.2 g of triphenylphosphine (0.8 wt% of the epoxy resin) for pre-reaction under 140°C for 5 hours, and a curable carbonate composition c1 can be obtained.

Specifically, by measuring the first mixture of Comparative Example 1 with the gel permeation chromatograph, the number average molecular weight thereof is 2847, and the weight average molecular weight thereof is 5481.

### <Comparative Example 2>

The manufacturing method of Comparative Example 2 is the same as Example 1, but triphenylphosphine is replaced with 2-phenylimidazole with the amount of 0.6 g (0.4 wt% of epoxy resin). The temperature of pre-reaction is changed to 100°C, and a curable carbonate composition c2 can be obtained. The solution of the curable carbonate composition c2 is clear reddish brown.

Specifically, by measuring the first mixture of Comparative Example 2 with the gel permeation chromatograph, the number average molecular weight thereof is 2687, and the weight average molecular weight thereof is 5307.

### <Comparative Example 3>

The manufacturing method of Comparative Example 3 is the same as Comparative Example 2, but the amount of 2-phenylimidazole is changed to 0.15 g (0.1 wt% of epoxy resin), and a curable carbonate composition c3 can be obtained. The solution of the curable carbonate composition c3 is clear reddish brown.

Specifically, by measuring the first mixture of Comparative Example 3 with the gel permeation chromatograph, the number average molecular weight thereof is 2817, and the weight average molecular weight thereof is 5421.

### <Comparative Example 4>

The manufacturing method of Comparative Example 4 is the same as Example 1, but the amount of bisphenol A is changed to 6.17 g (2.7×10⁻² mole). By measuring the first mixture obtained from Comparative Example 4 with the gel permeation chromatograph, the number average molecular weight thereof is 5559, and the weight average molecular weight thereof is 9729. Moreover, many floating insoluble substance appears in the subsequent process, and the final composition cannot be successfully obtained.

### <Comparative Example 5>

In 100 g (5×10⁻³ mole) of ground material of recycled polycarbonate RPC-y and 16.23 g of p-tert-butylphenol (PTBP; 1.08×10⁻¹ mole), add 100 g of cyclohexanone solvent. After the temperature is raised to 150°C, maintain the temperature and stir. Then, add 0.032 g (0.2 mol% of p-tert-butylphenol) of 1,8-diazabicyclo[5.4.0]undec-7-ene to react for 6 hours to form a first mixture. The first mixture includes a carbonate oligomer, and the carbonate oligomer has a structure represented by formula (C-2):

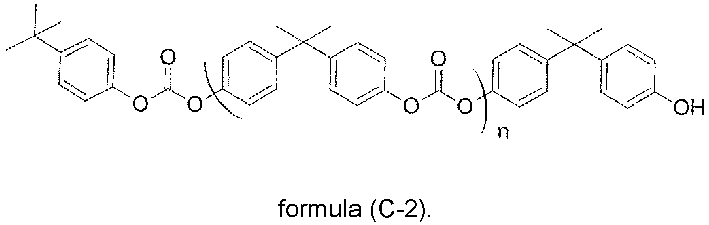

After the first mixture is cooled down, add 155.58 g of bisphenol A type epoxy resin, and stir under 110°C to form a second mixture. Then, add 1.2 g of triphenylphosphine (0.8 wt% of the epoxy resin) for pre-reaction under 140°C for 5 hours, and a curable carbonate composition c4 can be obtained.

Specifically, by measuring the first mixture of Comparative Example 5 with the gel permeation chromatograph, the number average molecular weight thereof is 2847, and the weight average molecular weight thereof is 5481.

### <Fabrication of Carbonate-Containing Thermoset>

### <Example 5 to Example 8>

In each of the curable carbonate composition f1 to the curable carbonate composition f4 manufactured in Example 1 to Example 4, respectively add 0.2 weight percentage of 4-dimethylaminopyridine, stir evenly and coat on the aluminum plate to bake under 150°C for 30 minutes. After drying, raise the temperature to 180°C to cure for 2 hours, and a carbonate-containing thermoset C-f1, a carbonate-containing thermoset C-f2, a carbonate-containing thermoset C-f3 and a carbonate-containing thermoset C-f4 can be respectively obtained.

### <Comparative Example 6 to Comparative Example 9>

The specific process is the same as Example 5 to Example 8, but the curable carbonate composition f1 to the curable carbonate composition f4 are replaced with the curable carbonate composition c1 to the curable carbonate composition c4, and a carbonate-containing thermoset C-c1, a carbonate-containing thermoset C-c2, a carbonate-containing thermoset C-c3 and a carbonate-containing thermoset C-c4 can be respectively obtained.

### <Stability Evaluation of Curable Carbonate Composition>

Because the conventional carbonate oligomer tends to precipitate after being mixed with the epoxy resin to form a solution, which is difficult to be stored stably. In the present disclosure, through the pre-reaction with the epoxy resin, the curable carbonate composition includes the carbonate-epoxy copolymer represented by formula (I), which has better solubility in the solvent and prevents precipitation at room temperature. However, the factors, such as the molecular weight of the carbonate oligomer and the selection of catalysts, are key influencing factors related to the improvement of stability. Further explanations will be provided through the aforementioned examples and comparative examples in the following paragraphs.

Table 1 shows the stabilities of the curable carbonate composition f1 to the curable carbonate composition f4 and the curable carbonate composition c1 to the curable carbonate composition c4 under 78°C, 60°C and room temperature (25°C), respectively. When precipitation or gelation of the curable carbonate composition occurs, the test is considered as over.

| Table 1 - Stability of Curable Carbonate Composition | | | | | | | | |
|---|---|---|---|---|---|---|---|---|
| | Curable Carbonate Composition | | | | | | | |
| | f1 | f2 | f3 | f4 | c1 | c2 | c3 | c4 |
| 78°C | > 10 days | > 10 days | > 10 days | > 10 days | > 10 days | 1 day | 2 days | > 10 days |
| 60°C | > 30 days | > 30 days | > 30 days | > 30 days | 15 days | 12 days | 26 days | 12 days |
| Room Temperature (25°C) | > 30 days | > 30 days | > 30 days | > 30 days | 8 days | 28 days | > 30 days | 5 days |

In Table 1, it can be understood that the curable carbonate composition f1 to the curable carbonate composition f4 manufactured in Example 1 to Example 4 can be stored at room temperature for over 30 days without precipitation. In contrast, the amount of bisphenol A added in Comparative Example 4 is smaller, resulting in the carbonate oligomer with higher molecular weight after alcoholysis. Even though the subsequent process thereof is the same as Example 1, the curable carbonate composition that is clear and stable cannot be successfully manufactured.

Furthermore, the curable carbonate composition c1 and the curable carbonate composition c4 manufactured in Comparative Example 1 and Comparative Example 5 use alcohols with single functional group during the alcoholysis stage, resulting in the carbonate oligomer after alcoholysis having only one alcohol functional group at the end. From the experimental results, even though the subsequent pre-reaction method is the same as that of Example 1, the final products have fewer reaction sites, which leads to poorer stability. Therefore, the curable carbonate composition c1 and the curable carbonate composition c4 precipitate within 10 days at room temperature, and under an environment of 60°C, the curable carbonate composition c1 and the curable carbonate composition c4 also precipitate within 15 days. It can be understood that, if the carbonate oligomer has two alcohol functional groups, the stability of the manufactured curable carbonate composition can be greatly affected.

The curable carbonate composition f1 to the curable carbonate composition f4 manufactured in Example 1 to Example 4 have good stability even in the environment with relatively high temperature, and can be stably stored for over 10 days at 78°C and over 20 days at 60°C. The aforementioned result is due to weaker catalytic effect of the second catalyst used during the pre-reaction stage, which prevents the curable carbonate composition from gelling at high temperature.

On the other hand, the amount of catalyst used during the pre-reaction stage for the curable carbonate composition c2 of Comparative Example 2 is similar to that of Example 1. However, the second catalyst of triphenylphosphine, which has weaker catalytic activity, is replaced with 2-phenylimidazole, which has stronger catalytic activity. It causes the curable carbonate composition c2 to gel within about 1 day at 78°C, and the reaction keeps processing slowly even at room temperature and gelation happens at around 28 days, so the storage stability is poor. The curable carbonate composition c3 is based on the curable carbonate composition c2, but with a significantly reduced amount of the second catalyst. Therefore, the gelation does not happen for over 30 days at room temperature, but happens just after 2 days at 78°C and within 30 days at 60°C, showing a significant difference compared to Example 1 to Example 4.

From the aforementioned results, the storage stability of the curable carbonate composition is highly related to the terminal group, molecular weight of the carbonate oligomer and the catalyst used during pre-reaction, which greatly influences the practical applications thereof.

### <Evaluation of Physical Properties of Carbonate-Containing Thermoset>

The thermal properties of the carbonate-containing thermosets of Example 5 to Example 8 and Comparative Example 6 to Comparative Example 9 are evaluated. The glass transition temperatures (T_{g}) thereof are measured under a heating rate of 10°C/min by the differential scanning calorimeter (DSC), and the results of T_{g} measurements are listed in Table 2 below.

| Table 2 - T_{g} Performance of Carbonate-Containing Thermoset | | | | |
|---|---|---|---|---|
| | Carbonate-Containing Thermoset | | | |
| | C-f1 | C-f2 | C-f3 | C-f4 |
| T_{g} (°C) | 120 | 138 | 166 | 116 |

| | Carbonate-Containing Thermoset | | | |
|---|---|---|---|---|
| | C-c1 | C-c2 | C-c3 | C-c4 |
| T_{g} (°C) | 85 | 116 | 118 | 103 |

In Table 2, it can be understood that the carbonate-containing thermoset C-f1 to the carbonate-containing thermoset C-f4 all exhibit excellent heat resistance with T_{g} greater than 110°C. In the circuit board industry in which the varnish products are frequently used, T_{g} greater than 110°C meets the IPC-4101/122 standard for FR-4 rigid circuit boards. Also, as the number of functional groups of the epoxy resin increases, the obtained carbonate-containing thermoset performs better heat resistance, which means that the curable carbonate composition manufactured in the present disclosure is potential for the applications as a base formula for electronic products.

In the physical property tests of the carbonate-containing thermoset C-c2 and the carbonate-containing thermoset C-c3, it can be observed that using different catalysts during the pre-reaction step does not significantly affect the T_{g} performance, but leads to significant differences in the stability performance of the curable carbonate composition (as shown in Table 1). In the carbonate-containing thermoset C-c1 and the carbonate-containing thermoset C-c4, the use of alcohols with single functional group as alcoholysis agents in the alcoholysis process resulted in the obtained carbonate oligomer having only one alcohol functional group. In addition to the significant differences observed in the aforementioned stability tests, the obtained carbonate-containing thermoset also performs poorer heat resistance and the application value thereof is reduced.

Therefore, the curable carbonate composition of the present disclosure has the characteristics such as high solid content and high storage stability. The uniformity of mixing during the curing process and the solubility in the solvent can be improved, the manufacturing processes can be simplified, and the energy consumption during curing and the generation of by-products can be reduced. Also, the cured product has excellent heat resistance, which is favorable for being a base formula for varnishes of the epoxy resin. Furthermore, the manufacturing method of the present disclosure allows the waste polycarbonate to form the carbonate oligomer by alcoholysis reaction, and directly form the curable carbonate composition without purification steps, and the goals of increasing value and reuse of the waste polycarbonate can be achieved.

## Claims

1. A carbonate-epoxy copolymer, **characterized in** comprising a structure represented by formula (I): 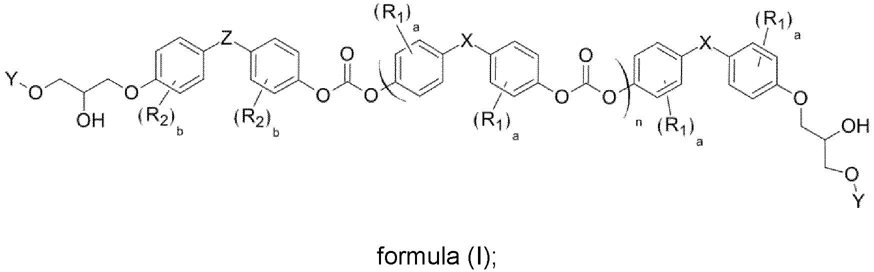
wherein each of R₁ and R₂ is a hydrogen atom, an alkyl group with a carbon number of 1 to 6, an allyl group, an alkoxy group with a carbon number of 1 to 6, an aryl group with a carbon number of 6 to 12, or a halogen atom independently; each of a and b is an integer of 0 to 4 independently; and n is an integer of 7 to 24;
wherein Y is a chemical structure comprising at least one epoxy group, each of X and Z is a single bond, a structure represented by formula (1), formula (2), formula (3), formula (4), formula (5), formula (6), formula (7), formula (8), formula (9), formula (10), or formula (11) independently: 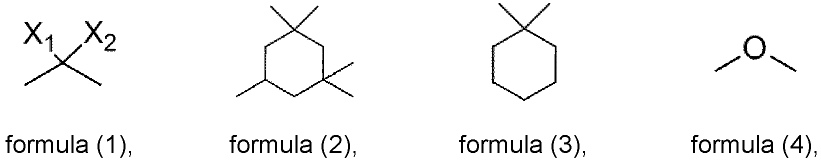 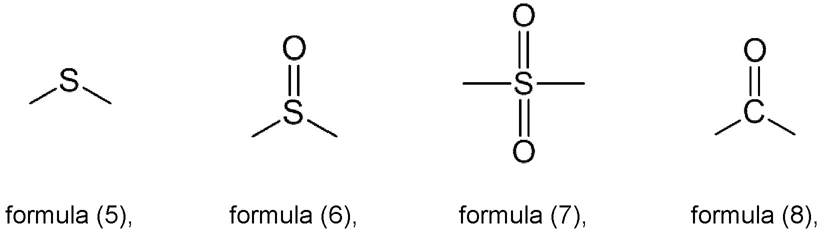 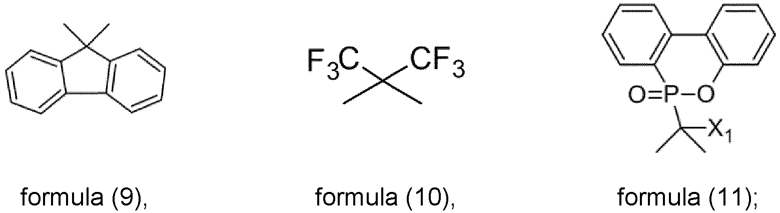
wherein each of X₁ and X₂ is a hydrogen atom, an alkyl group with a carbon number of 1 to 6, or an aryl group with a carbon number of 6 to 12 independently.

2. The carbonate-epoxy copolymer of claim 1, wherein the carbonate-epoxy copolymer comprises a structure represented by formula (I-a), formula (I-b), or formula (I-c):

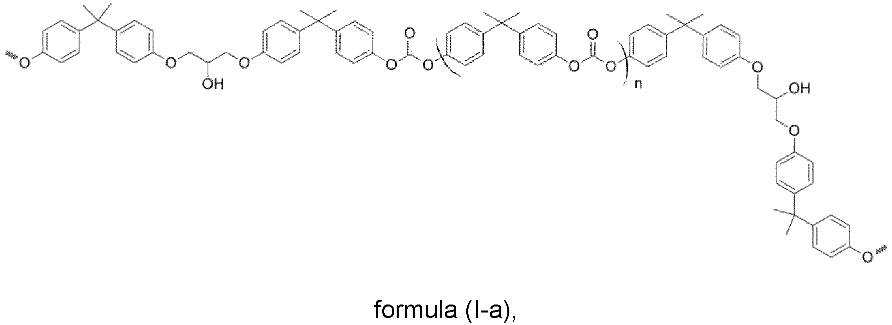

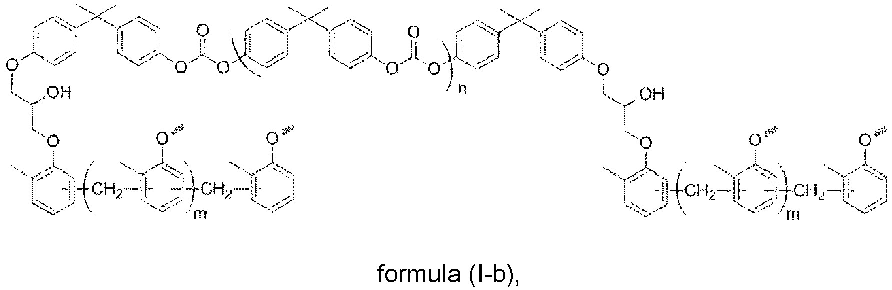

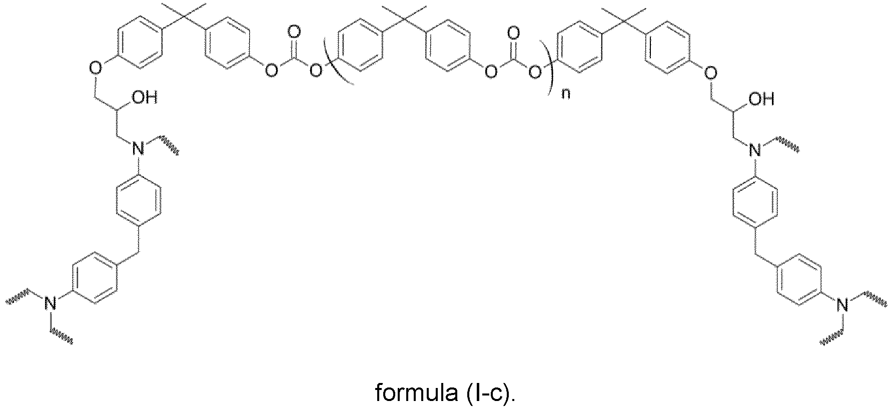

3. The carbonate-epoxy copolymer of claim 1 or claim 2, wherein the carbonate-epoxy copolymer is formed by a first mixture reacting with a second material, the first mixture is formed by a polycarbonate reacting with a first material, the first mixture comprises a carbonate oligomer, the second material comprises at least two epoxy groups, the first material has a structure represented by formula (i), and the carbonate oligomer has a structure represented by formula (ii):

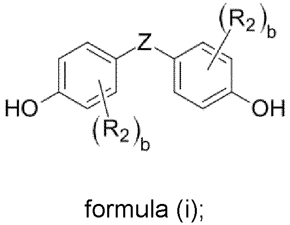

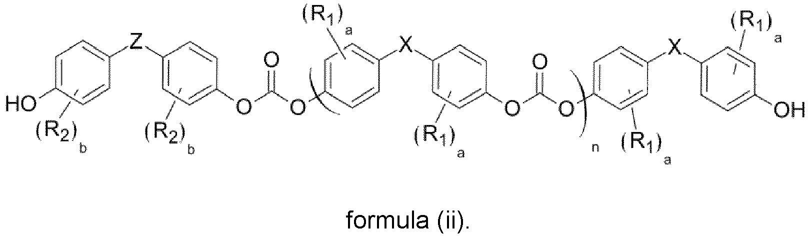

4. The carbonate-epoxy copolymer of claim 3, wherein a molar ratio of the first material to the polycarbonate is 6 to 20.

5. The carbonate-epoxy copolymer of claim 3 or claim 4, wherein a number average molecular weight of the first mixture is 1000 g/mole to 5000 g/mole.

6. A curable carbonate composition (f1, f2, f3, f4), **characterized in** comprising:
the carbonate-epoxy copolymer of any one of claims 1-5;
a solvent;
a first catalyst;
a second catalyst; and
an epoxy material.

7. The curable carbonate composition (f1, f2, f3, f4) of claim 6, wherein the curable carbonate composition (f1, f2, f3, f4) is a clear solution.

8. The curable carbonate composition (f1, f2, f3, f4) of claim 6 or claim 7, wherein the solvent is selected from a group consisting of N,N-dimethylacetamide, N-Methyl-2-pyrrolidone, dimethylformamide, methyl phenyl ether, dimethyl sulfoxide, 1-methoxy-2-propanol acetate, 1-methoxy-2-propanol propanoate, and cyclohexanone.

9. The curable carbonate composition (f1, f2, f3, f4) of any one of claims 6-8, wherein the first catalyst is selected from a group consisting of 1,8-diazabicyclo[5.4.0]undec-7-ene, 1,5,7-triazabicyclo[4.4.0]dec-5-ene, an imidazole compound, a pyridine compound, a tertiary amine compound, and a quaternary ammonium salt.

10. The curable carbonate composition (f1, f2, f3, f4) of any one of claims 6-9, wherein the second catalyst is selected from a group consisting of triphenylphosphine, a derivative of triphenylphosphine chloride, a derivative of triphenylphosphine bromide, a derivative of triphenylphosphine iodide, and a quaternary ammonium salt.

11. A manufacturing method of forming a carbonate-containing thermoset, **characterized in** comprising:
providing the curable carbonate composition (f1, f2, f3, f4) of any one of claims 6-10;
adding a promoter into the curable carbonate composition (f1, f2, f3, f4) to form a mixture; and
heating the mixture to a curing temperature.

12. The manufacturing method of claim 11, wherein the promoter is selected from a group consisting of 1,8-diazabicyclo[5.4.0]undec-7-ene, 1,5,7-triazabicyclo[4.4.0]dec-5-ene, an imidazole compound, a pyridine compound, and a tertiary amine compound.

13. The manufacturing method of claim 11 or claim 12, wherein an adding amount of the promoter is 0.05 weight percentage to 1.50 weight percentage of a total amount of the curable carbonate composition (f1, f2, f3, f4).

14. The manufacturing method of any one of claims 11-13, wherein the curing temperature is 150°C to 240°C.

15. The manufacturing method of any one of claims 11-14, wherein the carbonate-containing thermoset has a T_{g} greater than 110°C.
